# EUROPÄISCHE PATENTSCHRIFT

(11) **EP 0 778 924 B1**
(45) Veröffentlichungstag und Bekanntmachung des Hinweises auf die Patenterteilung: **18.12.2002**
(21) Anmeldenummer: 96919605.4
(22) Anmeldetag: 30.05.1996
(51) Int. Cl.: F15C 5/00

(54) **MIKROVENTIL UND VERFAHREN ZUR HERSTELLUNG EINES MIKROVENTILS**
MICRO-VALVE AND PROCESS FOR MANUFACTURING A MICRO-VALVE
MICRO-SOUPAPE ET PROCEDE DE FABRICATION D'UNE MICRO-SOUPAPE

(30) Priorität: 30.06.1995 DE 19523915
(43) Veröffentlichungstag der Anmeldung: 18.06.1997
(73) Patentinhaber: ROBERT BOSCH GMBH, 70442 Stuttgart (DE)
(72) Erfinder: HAHN, Dietmar, D-70839 Gerlingen (DE); FUCHS, Heinz, D-70469 Stuttgart (DE); FLIK, Gottfried, D-71229 Leonberg (DE); SCHITTNY, Thomas, D-71711 Steinheim (DE); BÖHRINGER, Alexandra, D-71229 Leonberg (DE)
(86) Internationale Anmeldenummer: DE9600939
(87) Internationale Veröffentlichungsnummer: WO97002433

(56) Entgegenhaltungen:
- DE-A- 4 221 089
- DE-C- 4 432 725

## Beschreibung

### Stand der Technik

Die Erfindung geht aus von einem Mikroventil nach der Gattung des unabhängigen Anspruchs 1 und von einem Verfahren zur Herstellung eines Mikroventils nach der Gattung des unabhängigen Anspruchs 11. Es ist unter anderem schon ein Mikroventil aus verbundenen Schichten aus der DE-OS 42 21 089 bekannt. Das dort beschriebene Mikroventil besteht aus drei schichtförmig aufeinandergesetzten Bauteilen. Diese Bauteile bestehen aus Kunststoffmaterial oder aus Aluminium. Das Schließglied des Mikroventils besteht aus einem abgeformten Kunststoff, der metallisches Pulver enthält, und ist aus mehreren Schichten aufgebaut. Zur Herstellung des Ventils werden Kunststofformprozesse, insbesondere Spritzgießen oder Prägen, zur Strukturierung verwendet. Die Festigkeit oder die chemische Widerstandsfähigkeit von den verwendeten Kunststoffen ist nicht immer optimal an vorgegebene Arbeitsumgebungen angepaßt.

### Vorteile der Erfindung

Das erfindungsgemäße Mikroventil mit den kennzeichnenden Merkmalen des Anspruchs 1 hat den Vorteil, daß es besonders kostengünstig und auf einfache Art und Weise aus Metall herstellbar ist. Somit ergeben sich alle positiven Metalleigenschaften für das Mikroventil. Für die einzelnen metallischen, galvanisch abgeschiedenen Bauteile des Mikroventils können engere Toleranzen bei gleichzeitig niedrigeren Fertigungskosten eingehalten werden als es bei der Fertigung bisher bekannter Mikroventile möglich ist.

Besonders vorteilhaft ist bei diesem erfindungsgemäßen Mikroventil, daß es keinen Ausgleich der Kräfte und Momente auf das Ventilschließelement besitzt, wie er bei bekannten Mikroventilen auftritt. Druckausgeglichene Mikroventile weisen ansonsten große hochbelastete Membranen auf. Aus der erfindungsgemäßen Ausbildung des druckausgeglichenen Mikroventils ergibt sich der Vorteil, daß keine mechanisch hochbelastete Membran als Konstruktionselement notwendig ist. Die gegenseitige Abhängigkeit von Ventilhub, zu schaltendem Fluiddruck und den lateralen Abmessungen (Abmessungen in x-,y-Richtung) des Mikroventils entfällt. Dadurch können auch Varianten mit kleinem Volumenstrom und großem Ventilhub gefertigt werden.

Durch die in den Unteransprüchen aufgeführten Maßnahmen sind vorteilhafte Weiterbildungen und Verbesserungen des im Anspruch 1 angegebenen Mikroventils möglich.

Besonders vorteilhaft ist es, daß sehr einfach mit der galvanischen Metallabscheidung am Mikroventil verschiedene Zerstäuberstrukturen integrierbar sind. So können problemlos metallische Schichten abgeschieden werden, die letztlich eine sogenannte S-Typ-Spritzlochscheibe oder eine Ringspaltdüse darstellen. Mit einer solchen galvanisch abgeschiedenen Ringspaltdüse am Mikroventil ist eine besonders gleichmäßige Feinstzerstäubung des Fluids möglich. Die Ringspaltdüse weist dazu wenigstens einen ununterbrochenen Ringspalt auf, so daß das abzuspritzende Fluid unmittelbar stromabwärts des Ringspaltes eine zusammenhängende, ringförmige Strahllamelle bildet. Diese Lamelle zerfällt in stromabwärtiger Richtung und mit zunehmendem Durchmesser in kleinste Tröpfchen.

Bei Verwendung von S-Typ-Spritzlochscheiben am Mikroventil ist von Vorteil, daß neben einer hohen Zerstäubungsgüte ausgefallene, bizarre Strahlformen erzeugt werden können. Diese Lochscheiben ermöglichen für Ein-, Zwei- und Mehrstrahlsprays Strahlquerschnitte in unzähligen Varianten, wie z. B. Rechtecke, Dreiecke, Kreuze, Ellipsen. Solche ungewöhnlichen Strahlformen erlauben eine genaue optimale Anpassung an vorgegebene Geometrien, z. B. beim Einsatz des Mikroventils als Brennstoffeinspritzventil an verschiedene Saugrohrquerschnitte von Brennkraftmaschinen.

Gegenüber makroskopischen Einspritzventilen sind das kleine Bauvolumen, der geringere Leistungsbedarf des Antriebs und die kürzere Schaltzeit vorteilhaft.

Das erfindungsgemäße Verfahren zur Herstellung eines Mikroventils mit den kennzeichnenden Merkmalen des Anspruchs 11 hat den Vorteil, daß Teile von Mikroventilen in reproduzierbarer Weise äußerst präzise und kostengünstig in sehr großen Stückzahlen gleichzeitig herstellbar sind, die aufgrund ihrer metallischen Ausbildung bruchsicher sind und sehr einfach und kostengünstig, z. B. durch Kleben, Löten oder Schweißen, an anderen Ventilbauteilen wie z. B. einem Topfmagneten, montierbar sind. Die erfindungsgemäßen Verfahrensschritte erlauben eine extrem große Gestaltungsfreiheit, da die Konturen weitgehend frei wählbar sind. In vorteilhafter Weise werden dabei Verfahren wie die UV-Tiefenlithographie, das Trockenätzen oder das Ablatieren mit einer Mikrogalvanik (Metallabscheidung aus wäßrigen Elektrolyten) kombiniert, um dünne metallische Schichten mit immer neuen Strukturen aufeinander abzuscheiden. Dieser Prozeß ist geeignet, um zwei, drei oder mehr Schichten für ein Mikroventil aufzubauen.

Durch die in den Unteransprüchen aufgeführten Maßnahmen sind vorteilhafte Weiterbildungen und Verbesserungen des im Anspruch 11 angegebenen Verfahrens zur Herstellung eines Mikroventils möglich.

Besonders vorteilhaft ist es, zwei Schichten des Mikroventils in einem Galvanikschritt aufzubauen, wobei das sogenannte "laterale Überwachsen" der Galvanik zur Anwendung kommt. Dabei wird ohne zusätzliches Aufbringen einer Galvanikstartschicht und einer neuen Schicht Photoresists das Wachsen des Metalls gezielt über die Photoresiststruktur der vorhergehenden Schicht fortgesetzt. Mit Hilfe des lateralen Überwachsens wird eine deutliche Kosten- und Zeitersparnis erreicht.

Weitere Vorteile und vorteilhafte Ausbildungen ergeben sich aus der Beschreibung.

### Zeichnung

Ausführungsbeispiele der Erfindung sind in der Zeichnung vereinfacht dargestellt und in der nachfolgenden Beschreibung näher erläutert. Es zeigen Figur 1 einen Schnitt durch ein erstes Mikroventil, Figur 2 einen Schnitt durch ein zweites Mikroventil, Figur 3 einen Schnitt durch ein drittes Mikroventil mit einer S-Typ-Spritzlochscheibe, Figur 4 einen Schnitt durch ein viertes Mikroventil mit einer Ringspaltdüse, Figur 5 einen Schnitt durch ein fünftes Mikroventil mit einer beweglichen Ringspaltdüse, Figur 6 einen Schnitt durch ein sechstes Mikroventil mit einer S-Typ-Spritzlochscheibe, Figur 7 schematisch die Prozeßfolge zur Herstellung eines Ventilschließelements mit integrierter Ringspaltdüse für ein Mikroventil und Figur 8 schematisch die Prozeßfolge des lateralen Überwachsens von galvanisch abgeschiedenen Schichten für ein Mikroventil.

### Beschreibung der Ausführungsbeispiele

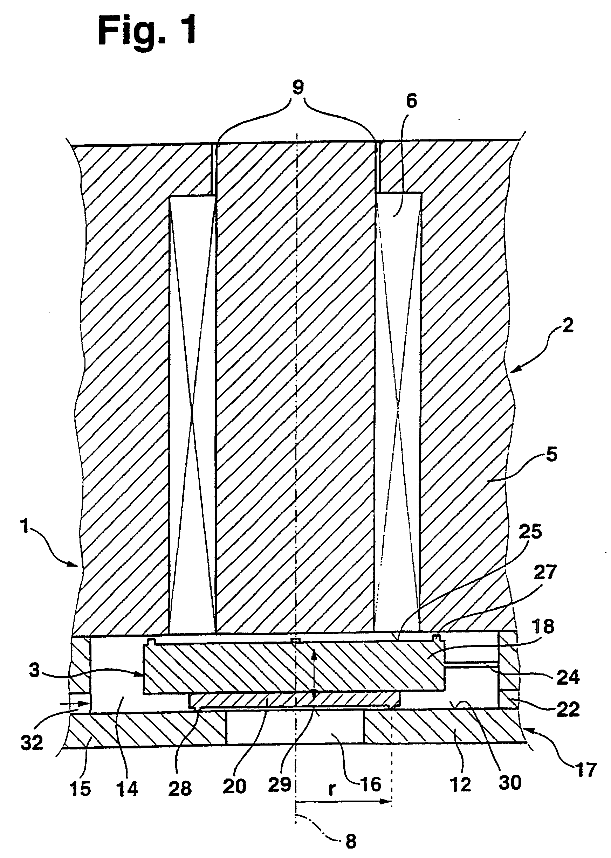

Das in der Figur 1 im Schnitt dargestellte Mikroventil 1 besteht hauptsächlich aus zwei zusammenwirkenden Grundbauteilen, aus einem elektromagnetischen Antrieb 2 zur Betätigung des Mikroventils 1 und aus einem Ventilunterteil 17 mit einem die Ventilfunktion ausübenden Betätigungsteil 3. Der Antrieb 2 wird beispielsweise von einem zylindrischen Topfmagneten 5 gebildet, in dem eine Magnetspule 6 integriert ist. Die konzentrisch um eine Ventillängsachse 8 ausgebildete Magnetspule 6 ist dabei vollständig radial nach innen und außen von dem Topfmagneten 5 umschlossen. Auf der dem Betätigungsteil 3 gegenüberliegenden Seite des Mikroventils 1 verlaufen z. B. zwei Spulenanschlüsse 9 aus dem Mikroventil 1 heraus, über die die Stromversorgung der Magnetspule 6 gewährleistet wird.

Da der Topfmagnet 5 im oberen Teil des Mikroventils 1 keine bewegten, dichtenden Teile aufweist, können zu dessen Herstellung z. B. feinmechanische Fertigungsverfahren mit relativ geringen Toleranzanforderungen angewandt werden, wie z. B. Stanzen, Prägen, Pulverspritzgießen, spanabhebende Bearbeitungsschritte, Erodieren oder Metal-Injection-Moulding (MIM)-Verfahren. Das bekannte Metal-Injection-Moulding-Verfahren bietet sich besonders bei der Herstellung des Topfmagneten 5 an und umfaßt die Herstellung von Formteilen aus einem Metallpulver mit einem Bindemittel, z. B. einem Kunststoffbindemittel, beispielsweise auf konventionellen Kunststoffspritzgießmaschinen und das nachfolgende Entfernen des Bindemittels und Sintern des verbleibenden Metallpulvergerüsts. Die Zusammensetzung des Metallpulvers kann dabei auf einfache Weise auf gewünschte optimale magnetische Eigenschaften des Topfmagneten 5 abgestimmt werden.

Die Magnetspule 6 kann als konventionell gewickelte Spule mit einer oder mehreren Windungen oder als Stanzteil bzw. mit Hilfe eines mehrschichtigen Dünnschicht- oder Dickschichtaufbaus gefertigt werden. Wenn eine massive, aus einer Windung bestehende Spule vorgesehen ist, kann diese auch in Form eines Metallstreifens in den Topfmagneten 5 hineingepreßt werden. Die Magnetspule 6 und der Topfmagnet 5 werden in diesem Fall mit einer verschleißfesten, isolierenden Schicht versehen. Der mit der Magnetspule 6 versehene Topfmagnet 5 ist mit einem Gehäuse 12 des Ventilunterteils 17, das das Betätigungsteil 3 weitgehend auf der dem Topfmagneten 5 abgewandten Seite und radial umschließt, beispielsweise durch Kleben, Schweißen oder Löten, zusammengefügt. Das Gehäuse 12 ist also topf- bzw. napfförmig ausgebildet und weist somit einen Öffnungsbereich 14 auf, in dem das Betätigungsteil 3 eingebettet ist. Eine den stromabwärtigen axialen Abschluß des Mikroventils 1 bildende Bodenplatte 15 des Gehäuses 12 besitzt eine z. B. konzentrisch zur Ventillängsachse 8 ausgebildete Auslaßöffnung 16, die in direkter Verbindung mit dem Öffnungsbereich 14 steht. Zusammen mit dem Betätigungsteil 3 bildet das Gehäuse 12 inklusive der Bodenplatte 15 und eventuell an der Bodenplatte 15 integrierter Lochscheiben bzw. Düsenplättchen das Ventilunterteil 17. Der Topfmagnet 5 ist letztlich mit seiner äußeren Begrenzung Teil des Gesamtgehäuses des Mikroventils 1.

Das in dem Öffnungsbereich 14 des Gehäuses 12 angeordnete Betätigungsteil 3 wird von zwei fest miteinander verbundenen metallischen Schichten gebildet, wobei die dem Topfmagnet 5 zugewandte Schicht einen plattenförmigen Anker 18 mit kreisförmigem Querschnitt und die zur Bodenplatte 15 hin zeigende Schicht ein scheibenförmiges Ventilschließelement 20 darstellen. Der weichmagnetische Anker 18 weist z. B. einen größeren Durchmesser sowie eine größere axiale Erstreckung (Dicke) als das Ventilschließelement 20 auf.

Zusammen füllen diese beiden das Betätigungsteil 3 bildenden Elemente den Öffnungsbereich 14 zu z. B. rund 3/4 aus. Bei einem Gesamtdurchmesser des Mikroventils 1 von z. B. 10 bis 12 mm haben der Anker 18 z. B. einen Durchmesser von 7,5 mm und das Ventilschließelement 20 z. B. einen Durchmesser von 5,5 mm. Die Dicken der Metallschichten, also des Ankers 18, des Ventilschließelements 20 und der Bodenplatte 15 werden üblicherweise im Bereich von 0,1 bis 1 mm liegen. Diese Größenangaben zu den Abmessungen des Mikroventils 1 sowie alle weiteren in der Beschreibung angegebenen Maße dienen nur dem besseren Verständnis und schränken die Erfindung in keiner Weise ein.

Das Betätigungsteil 3 besitzt eine direkte Verbindung zu dem Gehäuse 12, da zwischen einer sich zwischen dem Topfmagnet 5 und der Bodenplatte 15 erstreckenden ringförmigen Wandung 22 des Gehäuses 12 und dem Anker 18 stegartige, blattfederähnliche Federelemente 24 vorgesehen sind. Die z. B. drei, mit einem Abstand von 120° zueinander angeordneten, durch den Öffnungsbereich 14 radial verlaufenden Federelemente 24 weisen beispielsweise eine Dicke von 0,1 mm und eine Breite von 0,5 mm auf. Die Länge der Federelemente 24 ergibt sich zwangsläufig aus den Abmessungen von Anker 18 und Wandung 22. An einer dem Topfmagneten 5 zugewandten, oberen Stirnseite 25 des Ankers 18 sind an dessen äußerem Umfangsbereich Anschlagnoppen 27 ausgebildet, die bei geöffnetem Mikroventil 1 am Topfmagneten 5 anschlagen. Zweckmäßigerweise sind z. B. drei oder vier dieser Anschlagnoppen 27 am Anker 18 vorgesehen. Am Ventilschließelement 20 verläuft ein in Richtung Bodenplatte 15 zeigender Dichtring 28, der über eine untere Stirnfläche 29 des scheibenförmigen Ventilschließelements 20 hinausragt und das eigentliche Ventilschließglied darstellt. Der Dichtring 28 ist als umlaufende, kreisringförmige, eine geringe Breite aufweisende Erhebung des Ventilschließelements 20 ausgebildet. Eine obere Stirnseite 30 der Bodenplatte 15 stellt zumindest im Bereich des mit der Bodenplatte 15 korrespondierenden Dichtrings 28 des Ventilschließelements 20 eine Ventilsitzfläche dar.

Das zu schaltende Fluid, z. B. ein Brennstoff wie Benzin, wird über einen oder mehrere als Einlaß für ein Fluid dienende z. B. radial verlaufende Kanäle 32 in der Wandung 22 entsprechend der angegebenen Pfeilrichtung in den Hochdruckteil, d. h. in den Öffnungsbereich 14 des Mikroventils 1 gebracht. Wird das Ventil aktuiert, so übt der elektromagnetische Antrieb 2 eine Anziehungskraft auf das Betätigungsteil 3 aus. Der Dichtring 28 wird von der Ventilsitzfläche 30 abgehoben, und das Mikroventil 1 gibt einen Fluidstrom zur Auslaßöffnung 16 des Mikroventils 1 frei. Der Anker 18 schlägt dabei mit seinen Anschlagnoppen 27 an dem Topfmagneten 5 an. Der Hub des Betätigungsteils 3 ergibt sich durch die Höhe des Öffnungsbereichs 14 und der Anschlagnoppen 27, die den Hub also begrenzen. Außerdem verhindern die Anschlagnoppen 27 ein Festkleben des Ankers 18 am Topfmagneten 5. Nach dem Abschalten des Topfmagneten 5 wird der Anker 18 mit dem Ventilschließelement 20 von dem Fluid im Öffnungsbereich 14 und den Federelementen 24 in Richtung der Ventilsitzfläche 30 bewegt und das Mikroventil 1 geschlossen. Der Weg zwischen den beiden beschriebenen Endstellungen des Betätigungsteils 3 stellt somit den Hub dar. Die Öffnungs- und Schließbewegung des Betätigungsteils 3 ist mit einem axial verlaufenden Doppelpfeil kenntlich gemacht. Die schließende Kraft auf den Anker 18 ist die Federkraft der Federelemente 24 zuzüglich einer hydraulischen Kraft F, die gleich der Druckdifferenz Δp zwischen dem Öffnungsbereich 14 und dem Ventilausgang multipliziert mit der Fläche A des Ventilausgangs ist (F = Δp x πr²). Das gesamte Mikroventil 1 weist z. B. eine axiale Erstreckung von 10 bis 15 mm auf, ist damit sehr kompakt und benötigt so einen nur sehr geringen Einbauraum. In der Verwendung des Mikroventils 1 z. B. als Brennstoffeinspritzventil an Brennkraftmaschinen ergibt sich gegenüber heutigen herkömmlichen Einspritzventilen aufgrund der geringen Abmessungen des Mikroventils 1 eine Verkleinerung des Einbauraums um das Mehrfache auf 1/3 bis 1/10.

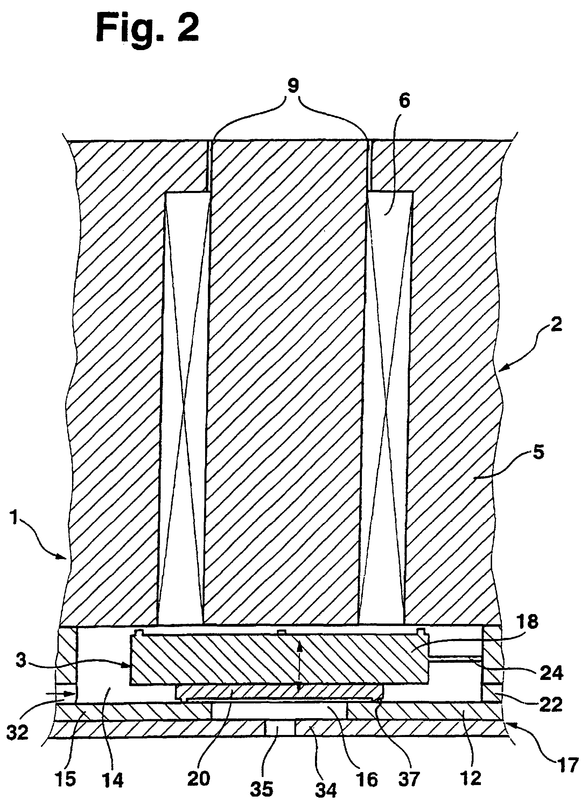

In den weiteren Ausführungsbeispielen der nachfolgenden Figuren sind die gegenüber dem in der Figur 1 dargestellten Ausführungsbeispiel gleichbleibenden bzw. gleichwirkenden Teile durch die gleichen Bezugszeichen gekennzeichnet. In der Figur 2 ist ein Mikroventil 1 dargestellt, das sich von dem in der Figur 1 gezeigten Mikroventil im Bereich der Bodenplatte 15 unterscheidet. Die Bodenplatte 15 wird nun z. B. mit einer zusätzlichen metallischen Schicht am stromabwärtigen Ende des Mikroventils 1 ergänzt, die eine Spritzlochplatte 34 darstellt. In ihrem zentralen, nahe der Ventillängsachse 8 liegenden Bereich weist die Spritzlochplatte 34 mindestens eine, typischerweise vier Abspritzlöcher 35 auf, die sich an die Auslaßöffnung 16 der Bodenplatte 15 anschließen. Die Spritzlochplatte 34 kann Teil der einschichtigen Bodenplatte 15 und damit im Gehäuse 12 integriert sein bzw. eine eigenständige Schicht zusätzlich zur Bodenplatte 15 darstellen oder die Bodenplatte 15 völlig ersetzen und somit die Ventilsitzfläche 30 mit aufweisen. Die Fläche eines Öffnungsspaltes 37, der sich zwischen der Ventilsitzfläche 30 und dem Dichtring 28 bei geöffnetem Mikroventil 1 ergibt, ist zwei- bis viermal so groß wie die Summe der Querschnittsflächen der Abspritzlöcher 35 der Spritzlochplatte 34. Bei geöffnetem Mikroventil 1 stellt sich die folgende Druckverteilung ein. Im Öffnungsbereich 14 liegt der Systemdruck des Mikroventils 1 an; an dem Öffnungsspalt 37 fällt ein Teil des Druckes und an dem wenigstens einen Abspritzloch 35 fällt der Hauptteil des Druckes ab. Die Druckdifferenz zwischen dem Hochdruckteil des Mikroventils 1 und dem Raum zwischen dem Öffnungsspalt 37 und den Abspritzlöchern 35 ist hinreichend groß für ein sicheres Schließen des Mikroventils 1.

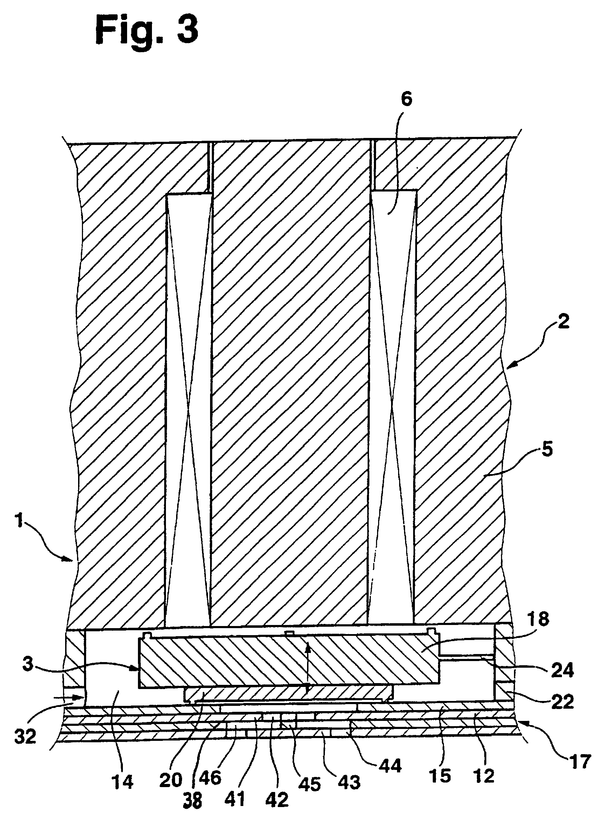

Das in der Figur 3 dargestellte Mikroventil 1 zeichnet sich besonders dadurch aus, daß im Bereich der Bodenplatte 15 ein modifizierter Abspritzbereich vorgesehen ist. Die Bodenplatte 15 ist z. B. in der Form einer ebenen, kreisförmigen, mehrschichtigen Scheibe (Multilayer-Spritzlochscheibe 38) ausgeführt. Ähnlich wie bei dem vorhergehenden Ausführungsbeispiel kann die Spritzlochscheibe 38 Teil der Bodenplatte 15 sein bzw. die Bodenplatte 15 in dem Sinne ersetzen, daß die Spritzlochscheibe 38 selbst vollständig den Boden des Mikroventils 1 darstellt. Bei dem Ausführungsbeispiel in Figur 3 ist die Spritzlochscheibe 38 als eine sogenannte "S-Typ-Scheibe" ausgestaltet, d. h. die Einlaß- und Auslaßöffnungen in der Spritzlochscheibe 38 sind zueinander versetzt ausgebildet, wodurch sich zwangsläufig ein "S-Schlag" in der Strömung des die Spritzlochscheibe 38 durchströmenden Fluids ergibt. Durch erfindungsgemäße Verfahrensschritte zur Herstellung des Mikroventils 1 und insbesondere der Spritzlochscheibe 38 ergibt sich eine Struktur, die aus mehreren Lagen zusammengesetzt ist. Auf die Herstellungsverfahren wird später noch detailliert eingegangen, wobei an dieser Stelle bereits einige wichtige, sich aus dem Verfahren ergebende Merkmale der Spritzlochscheibe 38 genannt seien.

Die Spritzlochscheibe 38 wird in z. B. drei metallischen Schichten durch galvanische Abscheidung aufgebaut. Aufgrund der tiefenlithographischen, galvanotechnischen Herstellung gibt es die besonderen Merkmale in der Konturgebung:
- Schichten mit über die gesamte Scheibenfläche weitgehend konstanter Dicke,
- durch die tiefenlithographische Strukturierung weitgehend senkrechte Einschnitte in den Schichten, welche die jeweils durchströmten Hohlräume bilden,
- gewünschte Hinterschneidungen und Überdeckungen der Einschnitte durch mehrschichtigen Aufbau einzeln strukturierter Metallschichten,
- Einschnitte mit beliebigen, weitgehend achsenparallele Wandungen aufweisenden Querschnittsformen, wie z. B. Rechteck, Vieleck, abgerundetes Rechteck, abgerundetes Vieleck, Ellipse, Kreis usw.

Die einzelnen Schichten werden nacheinander galvanisch abgeschieden, so daß sich die Folgeschicht aufgrund galvanischer Haftung fest mit der darunterliegenden Schicht verbindet.

Üblicherweise besitzt die Spritzlochscheibe 38 eine obere Schicht 41 mit vier Einlaßöffnungen 42, eine untere Schicht 43 mit vier Auslaßöffnungen 44 und z. B. eine zwischen den Schichten 41 und 43 liegende mittlere Schicht 45. Die Einlaßöffnungen 42 sind beispielsweise nahe der Ventillängsachse 8 angeordnet, während die Auslaßöffnungen 44 mit größerem Abstand zur Ventillängsachse 8 und damit einem radialen Versatz zu den Einlaßöffnungen 42 vorgesehen sind. In der mittleren Schicht 45 erstrecken sich vier radial verlaufende Kanäle 46, die eine direkte Verbindung von Einlaßöffnungen 42 und Auslaßöffnungen 44 bilden. Die Kanäle 46 besitzen z. B. eine solche Größe, daß sie in der Projektion die Einlaßöffnungen 42 und die Auslaßöffnungen 44 gerade überdecken. Neben dem radialen Versatz können auch die Einlaßöffnungen 42 und die Auslaßöffnungen 44 mit einem zusätzlichen Versatz in Umfangsrichtung angeordnet sein.

Durch den sogenannten S-Schlag innerhalb der Spritzlochscheibe 38 mit mehreren starken Strömungsumlenkungen wird der Strömung eine starke, zerstäubungsfördernde Turbulenz aufgeprägt. Der Geschwindigkeitsgradient quer zur Strömung ist dadurch besonders stark ausgeprägt. Er ist ein Ausdruck für die Änderung der Geschwindigkeit quer zur Strömung, wobei die Geschwindigkeit in der Mitte der Strömung deutlich größer ist als in der Nähe der Wandungen. Die aus den Geschwindigkeitsunterschieden resultierenden erhöhten Scherspannungen im Fluid begünstigen den Zerfall in feine Tröpfchen an den Auslaßöffnungen 44. Da die Strömung im Auslaß aufgrund der durch die Kanäle 46 dem Fluid aufgeprägten Radialströmungskomponente einseitig abgelöst ist, erfährt sie wegen fehlender Konturführung keine Strömungsberuhigung. Eine besonders hohe Geschwindigkeit weist das Fluid an der abgelösten Seite auf, während die Geschwindigkeit des Fluids zur Seite der Auslaßöffnungen 44 mit anliegender Strömung abfällt. Die zerstäubungsfördernden Turbulenzen und Scherspannungen werden somit im Austritt nicht vernichtet.

Spritzlochscheiben 38 in der Form von S-Typ-Scheiben können in vielfältiger Weise variiert werden. So ist es denkbar, anstelle der jeweils eine Einlaßöffnung 42 mit einer Auslaßöffnung 44 verbindenden Kanäle 46 in der mittleren Schicht 45 nur einen zusammenhängenden z. B. kreisringförmigen oder quadratförmigen Kanal 46 vorzusehen. Alle Einlaßöffnungen 42 münden dann in diesen Kanal 46, und alle Auslaßöffnungen 44 führen auch wieder aus dem Kanal 46 heraus. Die Einlaßöffnungen 42 und die Auslaßöffnungen 44 können mit beliebig großem Versatz zueinander angeordnet sein. Über die Größe des Versatzes können die Strahlrichtung und der Turbulenzgrad abgestimmt bzw. eingestellt werden. Neben den typischen quadratischen bzw. rechteckförmigen Querschnitten der Einlaßöffnungen 42, Auslaßöffnungen 44 und Kanäle 46 sind auch andere Querschnittsgeometrien einfach herstellbar, wie z. B. abgerundete Rechtecke oder Quadrate, Kreise, Kreissegmente, Ellipsen, Ellipsensegmente, Vielecke, abgerundete Vielecke usw. Interessant kann auch die unterschiedliche Ausbildung von Einlaßöffnungen 42 und Auslaßöffnungen 44 an einer Spritzlochscheibe 38 sein. Geeignete Querschnittsveränderungen stellen z. B. die Übergänge von Quadrat zu Rechteck und umgekehrt, von Rechteck zu Kreis und umgekehrt, von Ellipse zu Kreis und umgekehrt dar. Zudem können die Einlaßöffnungen 42 und Auslaßöffnungen 44 problemlos unterschiedliche Öffnungsweiten aufweisen.

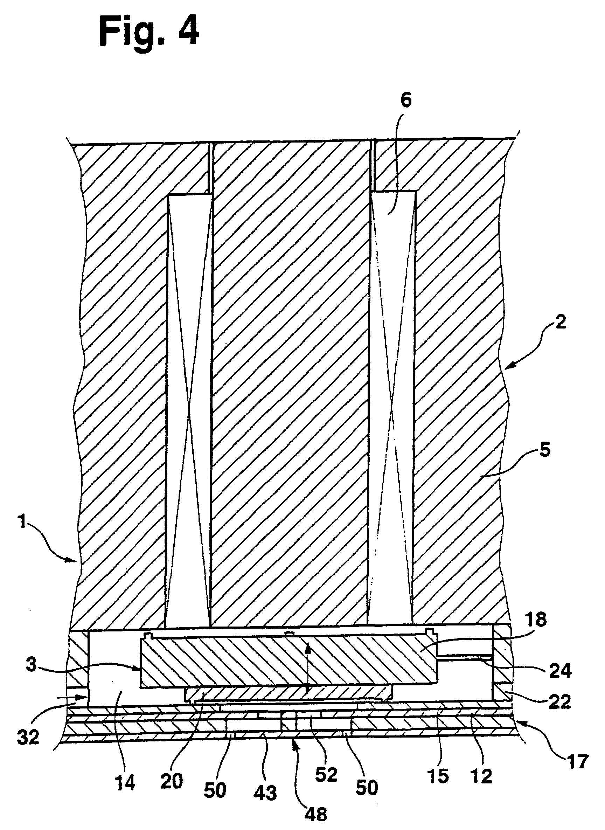

Das in der Figur 4 gezeigte Mikroventil 1 weist eine in der Bodenplatte 15 integrierte Ringspaltdüse 48 auf. Die Ringspaltdüse 48 unterscheidet sich hauptsächlich von der zuvor beschriebenen Spritzlochscheibe 38 im Bereich des Fluidauslasses. Anstelle mehrerer Auslaßöffnungen 44 in der Bodenplatte 15 besitzt die Ringspaltdüse 48, die ebenso wie die Spritzlochscheibe 38 z. B. dreischichtig ausgebildet ist, in der unteren Schicht 43 einen über den Umfang nicht unterbrochenen, engen Ringspalt 50. Der Ringspalt 50 weist dabei einen wesentlich größeren Durchmesser als eine Ringöffnung 52 in der oberen Schicht 41 der Ringspaltdüse 48 auf. Die Ringöffnung 52 kann auch durch mehrere Einlaßöffnungen 42 entsprechend der Anordnung in der Spritzlochscheibe 38 (Figur 3) ersetzt werden. In der mittleren Schicht 45 ist wiederum wenigstens ein Kanal 46 vorgesehen, der eine Verbindung von Ringöffnung 52 und Ringspalt 50 herstellt.

Mit dem Ringspalt 50 sind dünne Flüssigkeitshohllamellen abspritzbar, die in stromabwärtiger Richtung hinter dem Mikroventil 1 ausdünnen. Das Ausdünnen der Lamelle wird durch eine aufgrund der Tulpenform hervorgerufene entsprechende Zunahme des Lamellenumfangs begünstigt. Die freie Strahloberfläche wird so weiter vergrößert, und die Lamelle zerfällt in entsprechend kleinere Tröpfchen. Außerdem wird die räumliche Tröpfchenpackungsdichte bei größerem Lamellenquerschnitt geringer, wodurch im Brennstoffspray Tröpfchenwiedervereinigungen zu größeren Tropfen (Tröpfchenkoagulationen) weniger wahrscheinlich sind. Der Lamellenzerfall findet ab einem definierten Axialabstand zum Ringspalt 50 statt. Durch aerodynamische Wechselwirkungen mit dem die Lamelle umgebenden Gas wird die Lamellenoberfläche mit größerem Abstand zur Ringspaltdüse 48 immer stärker wellig (Taylorsche Schwingungen). Die in der Lamelle vorhandene Instabilität wird mit wachsendem Abstand vom Ringspalt 50 immer größer bis zu einem Punkt, an dem ein schlagartiger Zerfall in kleinste Tröpfchen erfolgt. Von Vorteil ist es bei dieser Anordnung, daß außer der entstehenden Welligkeit der Lamelle kaum andere Störungen auftreten. So werden beispielsweise in der sich stromabwärts verdünnenden Lamelle unerwünschte lokale Verdickungen, sogenannte Strähnen, vermieden.

Besonders wichtig ist, daß die Lamelle über ihren Umfang ununterbrochen bleibt. Ansonsten entstehen an einer Lamellenrißstelle zwei freie Lamellenenden, welche sich nach der Physik der Oberflächenspannung zu einer dicken Wulst zusammenziehen. Dies hat an solchen Orten größere Tropfen oder Strähnen zur Folge. Zudem wird bei einer Lamellenunterbrechung der tulpenförmige Lamellenverlauf gestört.

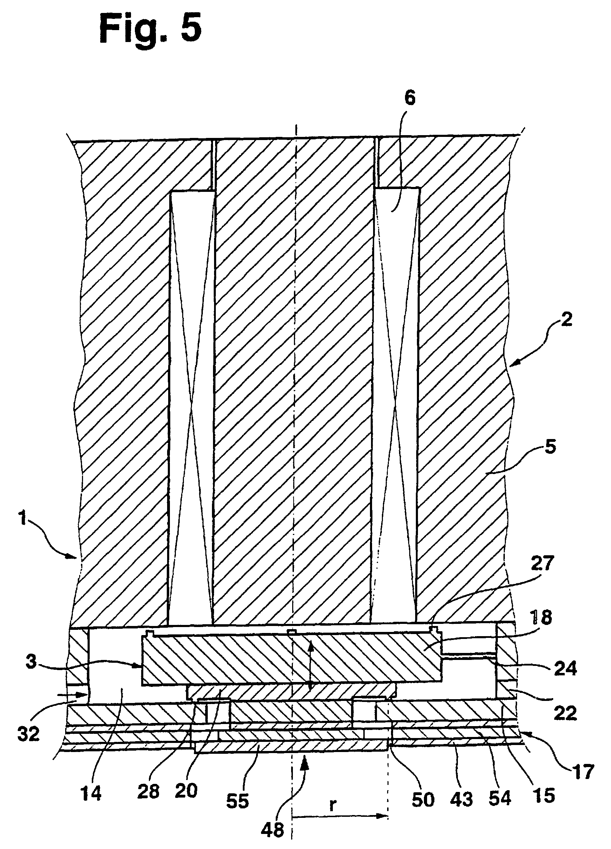

Die zuvor genannten Vorteile der Ringspaltabspritzung treffen vollständig auch auf das in der Figur 5 dargestellte Ausführungsbeispiel zu. Bei diesem Mikroventil 1 liegt die mehrschichtige Bodenplatte 15 bzw. Ringspaltdüse 48 in geteilter Form vor. Ein äußerer Ringbereich 54 ist als Teil des Gehäuses 12 fest mit der Wandung 22 und dem Topfmagnet 5 verbunden. Dagegen liegt ein innerer Düsenbereich 55 vollständig getrennt von dem äußeren Ringbereich 54 vor, wobei der Düsenbereich 55 allerdings Teil des beweglichen Betätigungsteils 3 ist. Somit macht der Düsenbereich 55 beim Öffnen und Schließen des Mikroventils 1 die Hubbewegung des Ventilschließelements 20 mit. Sowohl die Außenkontur des Düsenbereichs 55 als auch die Innenkontur des Ringbereichs 54 sind z. B. gestuft ausgeführt, wobei der Strömungsquerschnitt zwischen dem Düsenbereich 55 und dem Ringbereich 54 nahe des Ventilschließelements 20 am größten ist. Dieser größte Strömungsquerschnitt kann auch, wie in der Figur 5 gezeigt, in der Bodenplatte 15 vorgesehen sein. In stromabwärtiger Richtung verringert sich die Öffnungsweite z. B. schrittweise mit jeder neuen Schicht bis hin zur Weite des engen Ringspalts 50 in der unteren Schicht 43.

Der Ringspalt 50 ist mit einem solch großen Durchmesser ausgeführt, daß er ungefähr die gleiche Größe (Durchmesser) wie der Dichtring 28 des Ventilschließelements 20 aufweist. Dies führt dazu, daß die zum Schließen des Mikroventils 1 zur Verfügung stehende hydrostatische Kraft von der gesamten Druckdifferenz zwischen dem Systemdruck und dem Druck außerhalb des Mikroventils 1 und nicht nur von einem Teil dieser Differenz profitiert. Das Mikroventil 1 läßt sich somit schneller schließen.

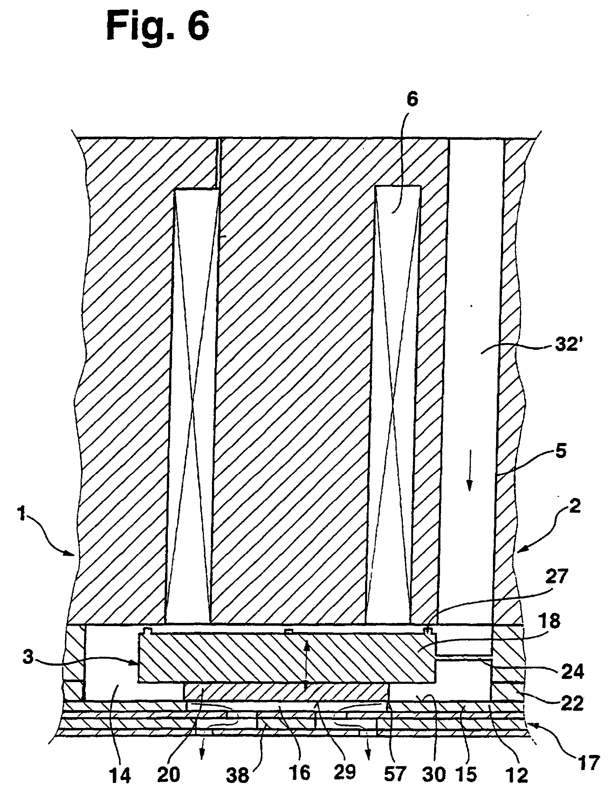

In der Figur 6 ist ein Mikroventil 1 dargestellt, das sich von allen vorherigen Ausführungsbeispielen in zwei Merkmalen unterscheidet, und zwar zum einen bei der Fluidzufuhr und andererseits bei der Ausbildung des Ventilschließelements 20. Bei diesem Mikroventil 1 ist der wenigstens eine Kanal 32' zur Zufuhr des Fluids zu dem Öffnungsbereich 14 des Gehäuses 12, in dem das Betätigungsteil 3 axial bewegt wird, parallel zur Ventillängsachse 8 ausgebildet. Der Kanal 32' verläuft dabei durch den Topfmagneten 5 z. B. über dessen volle axiale Erstreckung und mündet dann in den Öffnungsbereich 14. Ein solcher Kanal 32' kann z. B. in Umfangsrichtung gesehen genau dort in den Öffnungsbereich 14 münden, wo stromabwärts im Öffnungsbereich 14 ein Federelement 24 folgt. Das Ventilschließelement 20 besitzt bei diesem Ausführungsbeispiel des Mikroventils 1 keinen Dichtring. Vielmehr liegt das plättchenförmige Ventilschließelement 20 mit seiner unteren Stirnfläche 29 im geschlossenen Zustand des Mikroventils 1 unmittelbar auf der oberen Stirnseite 30 (Ventilsitzfläche) der Bodenplatte 15 auf. Allerdings ist der Außendurchmesser des Ventilschließelements 20 nur geringfügig größer als der Durchmesser der zentralen Auslaßöffnung 16 in der Bodenplatte 15, so daß das Ventilschließelement 20 nur mit einem kleinen äußeren Ringdichtbereich 57 dichtend an der Ventilsitzfläche 30 anliegt. Dieser Ringdichtbereich 57 muß jedoch wiederum so groß sein, daß eine vollständige Dichtheit am geschlossenen Mikroventil 1 gewährleistet ist. Ansonsten ist das Mikroventil 1 mit einer Spritzlochscheibe 38 (S-Typ-Scheibe) ähnlich dem dritten Ausführungsbeispiel (Figur 3) ausgestattet, wobei der S-Schlag der Strömung durch Pfeile kenntlich gemacht ist.

Eine andere, nicht dargestellte Ausführungsvariante des Mikroventils 1 betrifft den Einsatz eines Permanentmagneten. Ein z. B. an der Bodenplatte 15 angeordneter Permanentmagnet sorgt dafür, daß im stromlosen Zustand des elektromagnetischen Antriebs 2 der Anker 18 mit dem Ventilschließelement 20 zur Ventilsitzfläche 30 angezogen wird und somit das Mikroventil 1 geschlossen ist. Wird das Mikroventil 1 aktuiert, so zieht der Topfmagnet 5 den Anker 18 mit dem Ventilschließelement 20 an und hebt dabei die Wirkung des Permanentmagneten teilweise auf. Das Mikroventil 1 ist nun geöffnet. Bei diesem Ausführungsbeispiel kann auf die Federelemente 24 verzichtet werden,

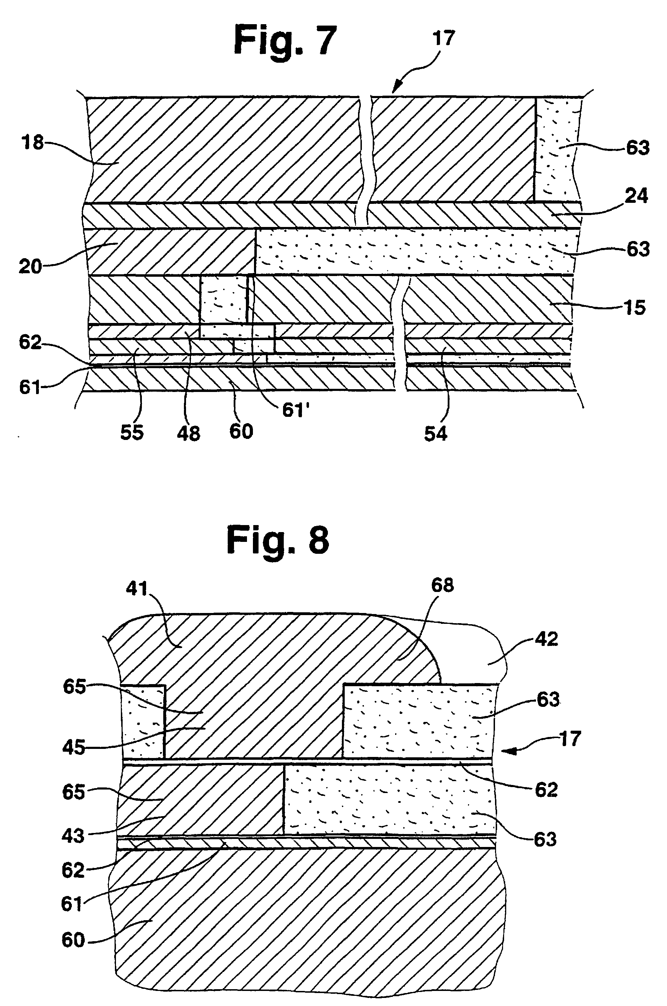

Anhand der Figuren 7 und 8 wird ein erfindungsgemäßes, zur Herstellung des Mikroventils 1 bzw. des Ventilunterteils 17 besonders geeignetes und bevorzugtes Herstellungsverfahren näher verdeutlicht. Dabei zeigen die Figuren nicht genau die in den Figuren 1 bis 6 dargestellten Ausführungsbeispiele des Ventilunterteils 17 mit den entsprechenden gewünschten Konturen, sondern nur das Herstellungsprinzip verdeutlichende Anordnungen. Die erfindungsgemäßen Herstellungsverfahrensschritte lassen jedoch eine Herstellung aller gezeigten Ausführungsbeispiele jederzeit zu.

Aufgrund der hohen Anforderungen an die Strukturdimensionen und die Präzision von Einspritzdüsen bzw. -ventilen gewinnen Mikrostrukturierungsverfahren heute eine zunehmende Bedeutung für ihre großtechnische Herstellung. Mit der vorliegenden Erfindung wird ein Verfahren zur Herstellung von Mikroventilen bzw. von einzelnen Bauteilen an Mikroventilen vorgeschlagen, die auf der sukzessiven Anwendung von photolithographischen Schritten (UV-Tiefenlithographie) und anschließender Mikrogalvanik beruht. Charakteristisch für das Verfahren ist, daß es auch in großflächigem Maßstab eine hohe Präzision der Strukturen gewährleistet, so daß es ideal für eine Massenfertigung mit sehr großen Stückzahlen einsetzbar ist. Auf einem Wafer (Nutzen) kann eine Vielzahl von Ventilunterteilen 17 für Mikroventile 1 gleichzeitig mittels der erfindungsgemäßen Verfahrensschritte gefertigt werden.

Ausgangspunkt für das Verfahren ist eine ebene und stabile Trägerplatte (Substrat) 60, die z. B. aus Metall (Kupfer), Silizium, Glas oder Keramik bestehen kann. Die üblichen Dicken dieser Trägerplatte 60 liegen zwischen 500 µm und 2 mm; sie haben allerdings keinen Einfluß auf die folgenden Verfahrensschritte. Nach der Reinigung der Trägerplatte 60 wird zunächst eine metallische (z. B. Cu, Ti) oder polymere Opferschicht 61 durch Aufdampfen, Sputtern, Aufschleudern, Sprühen oder ein anderes geeignetes Verfahren aufgetragen. Diese Opferschicht 61 wird nach der gesamten Batchprozessierung des Nutzens (Wafers) zum Zwecke einer einfachen Vereinzelung und des Ablösens der Bauteile, hier also der Ventilunterteile 17, von der Trägerplatte 60 selektiv z. B. durch Ätzen entfernt. Auf die Opferschicht 61 wird eine metallische Galvanikstartschicht 62 (z. B. Cu) durch Sputtern, Aufdampfen oder ein naßchemisches Verfahren (stromlose Metallabscheidung) aufgebracht. Die Galvanikstartschicht 62 wird zur elektrischen Leitung für die spätere Mikrogalvanik benötigt, bei der metallische Schichten galvanisch in strukturierten Photoresistschichten abgeschieden werden. Die Galvanikstartschicht 62 kann auch unmittelbar als Opferschicht 61 dienen.

Nach dieser Vorbehandlung der Trägerplatte 60 wird auf die Galvanikstartschicht 62 in einem nächsten Prozeßschritt ein solcher oben erwähnter Photoresist (Photolack) 63 ganzflächig aufgebracht. Dafür bieten sich besonders drei verschiedene Varianten an:
1. Auflaminieren eines Festresists bei z. B. rund 100°C,
2. Aufschleudern oder Sprühen eines Flüssigresists oder
3. Aufschleudern oder Sprühen eines Polyimids in flüssigem Zustand.
Der Photoresist 63 wird dabei in einer oder mehreren Schichten aufgetragen.

Nach dem Trocknen liegt der Photoresist 63 bei allen drei Varianten in fester Form vor. Die Dicke des Photoresists 63 sollte dabei der Dicke der Metallschicht entsprechen, die in dem später folgenden Galvanikprozeß realisiert werden soll, also z. B. der Dicke der unteren Schicht 43 der Spritzlochscheibe 38 (Figur 3). Typischerweise werden Schichtdicken zwischen 10 und 300 µm angestrebt je nach gewünschter Dicke der unterschiedlichen Schichten des Ventilunterteils 17. So werden die Schichten der Spritzlochscheibe 38 gewöhnlich eine geringere Dicke als z. B. der Anker 18 aufweisen. Die zu realisierende Metallstruktur soll mit Hilfe einer photolithographischen Maske invers in dem Photoresist 63 übertragen werden. Dabei besteht zum einen die Möglichkeit, den Photoresist 63 direkt über die Maske mittels UV-Belichtung (z. B. λ = 200 nm bis 500 nm) zu belichten (UV-Tiefenlithographie). Eine andere Möglichkeit der Strukturierung des Photoresists 63 sieht vor, daß auf dem Photoresist 63 ein Oxid (z. B. SiO₂) oder ein Nitrid abgeschieden wird, welches photolithographisch strukturiert als Maske für einen Trockenätzprozeß des Photoresists 63 dient. Außerdem bietet sich eine Laserablation an, wobei nach dem Aufbringen einer Maske explosionsartig Material des Photoresists 63 mit Hilfe eines Lasers abgetragen wird.

Nach der Entwicklung des UV-belichteten Photoresists 63 bzw. der Anwendung der anderen erwähnten Verfahren (Trockenätzen, Ablatieren) ergibt sich eine durch die Maske vorbestimmte gewünschte Struktur im Photoresist 63. Diese Struktur im Photoresist 63 stellt eine Negativstruktur zur späteren metallischen Schicht 43 der Spritzlochscheibe 38 dar (Figur 3). Analog handelt es sich bei den anderen Ausführungsbeispielen auch um die jeweils untere Schicht, mit der der Aufbau des geschichteten Ventiluncerteils 17 beginnt. Bei dem nun folgenden Verfahrensschritt des Galvanisierens wird in den entstandenen Resistgräben aus einem wäßrigen Elektrolyten ein Metall 65 oder eine metallische Legierung abgeschieden. Das Metall 65 legt sich durch das Galvanisieren eng an die Kontur der Negativstruktur des Photoresists 63 an, so daß die vorgegebenen Konturen formtreu in ihm reproduziert werden. Um mehrschichtige Strukturen herzustellen, sollte die Höhe der Galvanikschicht des Metalls 65 der Höhe des Photoresists 63 entsprechen. Die Wahl des abzuscheidenden Materials hängt von den jeweiligen Anforderungen an die Schicht ab, wobei besonders die Faktoren mechanische Festigkeit, chemische Beständigkeit, Schweißbarkeit und andere gewichtig sind.

Üblicherweise kommen Ni, NiCo, NiFe, Cu, Fe, Co, Zn oder Au zum Einsatz; es sind aber auch andere Metalle und Legierungen denkbar.

Um die Struktur des kompletten Ventilunterteils 17 zu realisieren, müssen die Schritte ab dem Aufbringen der Galvanikstartschicht 62 entsprechend der Anzahl der gewünschten Schichten wiederholt werden. Die einzelnen Metallschichten werden also nach der Resiststrukturierung immer wieder aufeinander abgeschieden und durch metallisches Haften aneinandergehalten. Für die Schichten und Bauteile eines Ventilunterteils 17 können durchaus auch unterschiedliche Metalle 65 verwendet werden, so daß z. B. der Anker 18 und die Spritzlochscheibe 38 keineswegs aus dem gleichen Material bestehen müssen. Es können vor der nächsten galvanischen Metallabscheidung zusätzlich zu den Galvanikstartschichten 62 weitere z. B. durch PVD (Physical Vapour Deposition) oder Naßchemie erzeugte haftvermittelnde Schichten auf den Photoresist 63 und/oder auf die vorherige metallische Schicht aufgetragen werden, womit die Qualität der Verbindungen der einzelnen Schichten untereinander verbessert werden kann.

Abschließend erfolgt das Vereinzeln der Ventilunterteile 17. Dazu wird die Opferschicht 61 weggeätzt, wodurch die Ventilunterteile 17 von der Trägerplatte 60 abheben. Danach werden die Galvanikstartschichten 62 durch Ätzung entfernt und der verbliebene Photoresist 63 aus den Metallstrukturen herausgelöst. Dies kann z. B. durch eine KOH-Behandlung oder durch ein Sauerstoffplasma bzw. mittels Lösungsmitteln (z. B. Aceton) bei Polyimiden ermöglicht werden. Diese Prozesse des Herauslösens des Photoresists 63 sind allgemein unter dem Oberbegriff "Strippen" bekannt. Als alternative Lösung ist auch ein mechanisches Lösen von der Trägerplatte 60 bei geeigneter Wahl der Galvanikstartschicht 62 z. B. mittels Magneten denkbar. Eine Vereinzelung mittels Ultraschall ist ebensogut denkbar.

In der Figur 7 wird deutlich, daß es besonders zweckmäßig ist, die metallische Schicht für die Federelemente 24 zwischen dem Anker 18 und dem Ventilschließelement 20 abzuscheiden. Entsprechend der gewünschten Anzahl von Federelementen 24 ragt diese Metallschicht in einigen Bereichen radial über die äußere Begrenzung des Ankers 18 hinaus.
Sollen Strukturen mit geneigten oder gerundeten Seitenwänden gefertigt werden, kann dies durch das sogenannte laterale Überwachsen 68 geschehen. Bei dieser Technik können zwei gewünschte Schichten des Ventilunterteils 17 in einem Schritt durch galvanische Abscheidung ausgebildet werden. In der Figur 8 wird das laterale Überwachsen 68 anhand zweier mit den Bezugszeichen 41 und 45 bezeichneter Schichten verdeutlicht. Das galvanisch abzuscheidende Metall 65 wächst erst in der bekannten Form um die Photoresiststruktur 63 der Schicht 45 bis zur Oberkante des Photoresists 63 und danach über den Photoresist 63 hinaus. Das Überwachsen 68 der Photoresiststruktur 63 erfolgt in horizontaler und vertikaler Richtung ungefähr in gleicher Größenordnung. Dieses partielle Überwachsen 68 ersetzt das Aufbringen einer weiteren Galvanikstartschicht 62 auf dem Photoresist 63 und einer nächsten Galvanikschicht an sich, da zwei Schichten 45, 41 des Ventilunterteils 17 in einem Galvanikschritt erzeugt werden. Auf diese Weise können z. B. ganz gezielt die Einlaßöffnungen 42 in der oberen Schicht 41 der Spritzlochscheibe 38 (Figur 3) hergestellt werden. Das laterale Überwachsen 68 muß zu bestimmten Zeitpunkten entsprechend abgebrochen werden, um die gewünschten Öffnungsgrößen zu erhalten. Andererseits kann aber auch eine weitere Photoresistschicht 63 in der axialen Höhe des Überwachsens 68 vorgesehen sein, die letztlich als Anschlag für das laterale Überwachsen 68 der Schicht 41 dient und eine genau definierte Größe der Einlaßöffnungen 42 garantiert.

Zum Trennen von Strukturen, die später gegeneinander beweglich (siehe Figur 5) sein sollen, wird eine geeignete Opferschicht 61' an den zu trennenden Stellen eingesetzt, wie in der Figur 7 zu sehen ist. Dies kann insbesondere eine durch PVD erzeugte Titan- oder Kupferschicht sein, die vor dem Abscheiden der folgenden metallischen, später zum beweglichen Teil (Düsenbereich 55) des Mikroventils 1 gehörenden Schicht auf die vorangegangene Schicht des späteren festen Ringbereichs 54 aufgetragen wird.

Vor oder nach dem Entfernen der Opferschichten 61, 61', der Galvanikstartschichten 62 bzw. des Photoresists 63 können z. B. die notwendigen Fügeprozesse (z. B. Kleben, Schweißen, Löten) zum Verbinden des Ventilunterteils 17 und des Topfmagneten 5 vorgenommen werden.

## Patentansprüche

1. Mikroventil aus übereinander angeordneten, zumindest teilweise miteinander verbundenen Schichten, wobei mindestens eine Schicht mindestens teilweise aus einem metallischen Material gebildet ist, mit wenigstens einem Einlass und wenigstens einem Auslass und einer dazwischengeschalteten Ventilsitzfläche, die einem Ventilschließelement zugeordnet ist, das durch einen Antrieb auslenkbar ist, **dadurch gekennzeichnet, dass** das Mikroventil (1) aus zwei voneinander getrennt ausgebildeten Grundbausteinen, nämlich einem elektromagnetischen Antrieb (2) und einem mehrschichtigen Ventilunterteil (17), gebildet ist, wobei das ausschließlich metallische Ventilunterteil (17) wenigstens einen Anker (18), das Ventilschließelement (20), die Ventilsitzfläche (30) und den wenigstens einen Auslass (16, 35, 44, 50) umfasst und sämtliche Schichten des Ventilunterteils (17) galvanisch aufeinander abgeschieden sind.

2. Mikroventil nach Anspruch 1, **dadurch gekennzeichnet, daß** das Ventilunterteil (17) von einem napfförmigen Gehäuse (12) nach außen begrenzt ist, das wenigstens eine Bodenplatte (15) und eine ringförmige Wandung (22) umfaßt, und einen durch das Gehäuse (12) zumindest teilweise umschlossenen Öffnungsbereich (14) hat, in den der wenigstens eine Einlaß (32, 32') mündet und von dem der wenigstens eine Auslaß (16, 35, 44, 50) ausgeht.

3. Mikroventil nach Anspruch 2, **dadurch gekennzeichnet, daß** in dem öffnungsbereich (14) des Ventilunterteils (17) der Anker (18) und das Ventilschließelement (20) angeordnet sind.

4. Mikroventil nach Anspruch 2, **dadurch gekennzeichnet, daß** die Bodenplatte (15) des Gehäuses (12) die Ventilsitzfläche (30) aufweist, die mit dem Ventilschließelement (20) zusammenwirkt.

5. Mikroventil nach Anspruch 2, **dadurch gekennzeichnet, daß** der Anker (18) und das Ventilschließelement (20) ein bewegliches Betätigungsteil (3) bilden, das über wenigstens ein Federelement (24) mit der Wandung (22) des Gehäuses (12) verbunden ist.

6. Mikroventil nach Anspruch 1 oder 2, **dadurch gekennzeichnet, daß** der Anker (18) einen größeren Durchmesser aufweist als das Ventilschließelement (20).

7. Mikroventil nach Anspruch 2, **dadurch gekennzeichnet, daß** die Bodenplatte (15) des Gehäuses (12) eine Spritzlochplatte (34) umfaßt, die wenigstens ein Abspritzloch (35) besitzt.

8. Mikroventil nach Anspruch 2, **dadurch gekennzeichnet, daß** die Bodenplatte (15) des Gehäuses (12) eine mehrschichtige Spritzlochscheibe (38) umfaßt, deren wenigstens eine Einlaßöffnung (42) radial versetzt, also exzentrisch zu wenigstens einer Auslaßöffnung (44) angeordnet ist.

9. Mikroventil nach Anspruch 2, **dadurch gekennzeichnet, daß** die Bodenplatte (15) des Gehäuses (12) eine Ringspaltdüse (48) umfaßt, die als Auslaß einen ununterbrochenen Ringspalt (50) aufweist.

10. Mikroventil nach Anspruch 2 oder 5, **dadurch gekennzeichnet, daß** die Bodenplatte (15) durch einen zum festen Teil des Gehäuses (12) gehörenden äußeren Ringbereich (54) und durch einen inneren, fest mit dem Betätigungsteil (3) verbundenen und damit zum beweglichen Teil des Ventilunterteils (17) gehörenden Düsenbereich (55) gebildet ist.

11. Verfahren zur Herstellung eines Mikroventils, das mit übereinander angeordneten, zumindest teilweise miteinander verbundenen Schichten aufgebaut ist, wobei mindestens eine Schicht mindestens teilweise aus einem metallischen Material gebildet ist, und das wenigstens einen Einlass und wenigstens einen Auslass und eine dazwischengeschaltete Ventilsitzfläche, die einem Ventilschließelement zugeordnet ist, das durch einen Antrieb auslenkbar ist, aufweist, **dadurch gekennzeichnet, dass** das Mikroventil (1) mit zwei voneinander getrennt ausgebildeten Grundbausteinen, nämlich einem elektromagnetischen Antrieb (2) und einem mehrschichtigen Ventilunterteil (17), aufgebaut wird, wobei das ausschließlich metallische Ventilunterteil (17) wenigstens einen Anker (18), das Ventilschließelement (20), die Ventilsitzfläche (30) und den wenigstens einen Auslass (16, 35, 44, 50) umfasst und sämtliche Schichten des Ventilunterteils (17) durch galvanische Metallabscheidung aufeinander aufgebaut werden.

12. Verfahren nach Anspruch 11, **dadurch gekennzeichnet, daß** in einem ersten Verfahrensschritt auf eine Trägerplatte (60) eine Opferschicht (61) aufgebracht wird, danach eine Photoresistschicht (63) aufgetragen wird, anschließend eine gezielte Strukturierung des Photoresists (63) vorgenommen wird, wodurch im Photoresist (63) eine Negativstruktur zur späteren Schicht des Mikroventils (1) entsteht, nachfolgend eine Mikrogalvanik stattfindet, bei der die in der Negativstruktur des Photoresists (63) entstandenen Resistgräben galvanisch mit Metall (65) aufgefüllt werden, danach entsprechend der gewünschten Anzahl der Schichten (15, 18, 20, 22, 24, 34, 38, 41, 43, 45, 48) des Mikroventils (1) eine Wiederholung der vorgenannten Verfahrensschritte vollzogen wird, und zum Schluß eine Vereinzelung der Mikroventile (1) erfolgt sowie der Photoresist (63) aus den Metallstrukturen herausgelöst wird.

13. Verfahren nach Anspruch 12, **dadurch gekennzeichnet, daß** zwischen den einzelnen, galvanisch abzuscheidenden Schichten Galvanikstartschichten (62) aufgebracht werden.

14. Verfahren nach Anspruch 12, **dadurch gekennzeichnet, daß** das Aufbringen des Photoresists (63) als Laminieren eines Festresists erfolgt.

15. Verfahren nach Anspruch 12, **dadurch gekennzeichnet, daß** das Aufbringen des Photoresists (63) als Aufschleudern oder Sprühen eines Flüssigresists erfolgt.

16. Verfahren nach Anspruch 12, **dadurch gekennzeichnet, daß** das Aufbringen des Photoresists (63) als Aufschleudern oder Sprühen eines Polyimids im flüssigen Zustand erfolgt.

17. Verfahren nach Anspruch 12, **dadurch gekennzeichnet, daß** die Strukturierung des Photoresists (63) mittels UV-Belichtung über eine Maske und anschließender Entwicklung erfolgt (UV-Tiefenlithographie).

18. Verfahren nach Anspruch 12, **dadurch gekennzeichnet, daß** die Strukturierung des Photoresists (63) durch Abscheidung eines Oxids oder Nitrids erfolgt, welches photolithographisch strukturiert als Maske für einen Trockenätzprozeß des Photoresists (63) dient.

19. Verfahren nach Anspruch 12, **dadurch gekennzeichnet, daß** die Strukturierung des Photoresists (63) durch Ablatieren mittels eines Lasers vorgenommen wird.

20. Verfahren nach Anspruch 12, **dadurch gekennzeichnet, daß** zwei Schichten (15, 18, 20, 22, 24, 34, 38, 41, 43, 45, 48) des Mikroventils (1) in einem Galvanikschritt hergestellt werden, bei dem das Metall (65) über den Photoresist (63) horizontal und vertikal hinauswächst (laterales Überwachsen).

## Claims

1. Micro-valve comprising layers arranged one on top of the other and at least partially connected to one another, at least one layer being formed at least partially from a metallic material, with at least one inlet and at least one outlet and a valve-seat face arranged in between, which is assigned to a valve-closing element which can be deflected by a drive, **characterized in that** the micro-valve (1) is formed by two basic modules formed separately from each other, namely an electromagnetic drive (2) and a multi-layered lower valve part (17), the exclusively metallic lower valve part (17) comprising at least one armature (18), the valve-closing element (20), the valve-seat face (30) and the at least one outlet (16, 35, 44, 50), and all the layers of the lower valve part (17) being electrodeposited one on top of the other.

2. Micro-valve according to Claim 1, **characterized in that** the lower valve part (17) is outwardly bounded by a cup-shaped housing (12), which comprises at least one bottom plate (15) and an annular wall (22), and has an opening region (14) which is at least partially enclosed by the housing (12) and into which the at least one inlet (32, 32') opens and from which the at least one outlet (16, 35, 44, 50) emerges.

3. Micro-valve according to Claim 2, **characterized in that** the armature (18) and the valve-closing element (20) are arranged in the opening region (14) of the lower valve part (17).

4. Micro-valve according to Claim 2, **characterized in that** the bottom plate (15) of the housing (12) has the valve-seat face (30), which interacts with the valve-closing element (20).

5. Micro-valve according to Claim 2, **characterized in that** the armature (18) and the valve-closing element (20) form a movable actuating part (3), which is connected to the wall (22) of the housing (12) by means of at least one spring element (24).

6. Micro-valve according to Claim 1 or 2, **characterized in that** the armature (18) has a greater diameter than the valve-closing element (20).

7. Micro-valve according to Claim 2, **characterized in that** the bottom plate (15) of the housing (12) comprises a perforated spray plate (34), which has at least one spray hole (35).

8. Micro-valve according to Claim 2, **characterized in that** the bottom plate (15) of the housing (12) comprises a multi-layered perforated spray plate (38), the at least one inlet opening (42) of which is arranged radially offset, that is eccentrically, in relation to at least one outlet opening (44).

9. Micro-valve according to Claim 2, **characterized in that** the bottom plate (15) of the housing (12) comprises an annular-gap nozzle (48), which has as an outlet an uninterrupted annular gap (50).

10. Micro-valve according to Claim 2 or 5, **characterized in that** the bottom plate (15) is formed by an outer annular region (54), belonging to the fixed part of the housing (12), and by an inner nozzle region (55), connected fixedly to the actuating part (3) and consequently belonging to the movable part of the lower valve part (17).

11. Process for manufacturing a micro-valve, which is constructed with layers arranged one on top of the other and at least partially connected to one another, at least one layer being formed at least partially from a metallic material, and which has at least one inlet and at least one outlet and a valve-seat face arranged in between, which is assigned to a valve-closing element which can be deflected by a drive, **characterized in that** the micro-valve (1) is constructed with two basic modules formed separately from each other, namely an electromagnetic drive (2) and a multi-layered lower valve part (17), the exclusively metallic lower valve part (17) comprising at least one armature (18), the valve-closing element (20), the valve-seat face (30) and the at least one outlet (16, 35, 44, 50), and all the layers of the lower valve part (17) being constructed by metal electrodeposition one on top of the another.

12. Process according to Claim 11, **characterized in that**, in a first process step, a sacrificial layer (61) is applied to a carrier plate (60), after that a photoresist layer (63) is applied, subsequently a targeted structuring of the photoresist (63) is performed, whereby a negative structure with respect to the later layer of the micro-valve (1) is created in the photoresist (63), after which an electroplating takes place, in which the resist trenches created in the negative structure of the photoresist (63) are filled with metal (65) by electrodeposition, after that the aforementioned process steps are repeated in accordance with the desired number of layers (15, 18, 20, 22, 24, 34, 38, 41, 43, 45, 48) of the micro-valve (1), and in conclusion an individual separation of the micro-valves (1) takes place and the photoresist (63) is dissolved out of the metal structures.

13. Process according to Claim 12, **characterized in that** electroplating starting layers (62) are applied between individual layers to be electrodeposited.

14. Process according to Claim 12, **characterized in that** the application of the photoresist (63) takes place by laminating a solid resist.

15. Process according to claim 12, **characterized in that** the application of the photoresist (63) takes place by spinning or spraying on a liquid resist.

16. Process according to Claim 12, **characterized in that** the application of the photoresist (63) takes place by spinning or spraying on a polyimide in the liquid state.

17. Process according to Claim 12, **characterized in that** the structuring of the photoresist (63) takes place by means of UV exposure via a mask and subsequent development (UV deep lithography).

18. Process according to Claim 12, **characterized in that** the structuring of the photoresist (63) takes place by depositing an oxide or nitride, which in a photolithographically structured form serves as a mask for a dry etching process of the photoresist (63).

19. Process according to Claim 12, **characterized in that** the structuring of the photoresist (63) is performed by ablation by means of a laser.

20. Process according to Claim 12, **characterized in that** two layers (15, 18, 20, 22, 24, 34, 38, 41, 43, 45, 48) of the micro-valve (1) are produced in one electroplating step, in which the metal (65) grows out horizontally and vertically over the photoresist (63) (lateral overgrowth).

## Revendications

1. Micro-soupape formée de couches superposées au moins reliées partiellement entre elles,
au moins une couche étant formée au moins partiellement de matière métallique avec au moins une entrée et au moins une sortie et, entre Belles-ci, au moins une surface formant siège de soupape associée à un élément d'obturation de soupape que l'on peut déplacer à l'aid d'un moyen d'entraînement,
**caractérisée en ce que**
la micro-soupape (1) se compose de deux composants de base réalisés séparément à savoir un moyen d'entraînement électromécanique (2) et une partie inférieure de soupape (17) à plusieurs couches,
la partie inférieure de soupape (17) exclusivement métallique, comprend au moins un induit (18), l'élément d'obturation de soupape (20), la surface formant siège de soupape (30) et au moins une sortie (16, 35, 44, 50), et
toutes les couches de la partie inférieure (17) sont déposées Tune sur l'autre par un dépôt galvanique.

2. Micro-soupape selon la revendication 1,
**caractérisée en ce que**
la partie inférieure (17) de la soupape est délimitée vers l'extérieur par un boîtier (12) en forme de cuvette ayant au moins une plaque de fond (15) et une paroi annulaire (22) ainsi qu'une zone d'ouverture (14) entourée au moins en partie par le boîtier (12), zone dans laquelle débouche au moins une entrée (32, 32') et d'où sort au moins une sortie (16, 35, 44, 50).

3. Micro-soupape selon la revendication 2,
**caractérisée en ce que**
l'induit (18) et l'organe d'obturation de soupape (20) sont prévus dans la zone d'ouverture (14) de la partie inférieure de soupape (17).

4. Micro-soupape selon la revendication 2,
**caractérisée en ce que**
la plaque de fond (15) du boîtier (12) comporte une surface formant siège de soupape (30) coopérant avec l'élément d'obturation de soupape (20).

5. Micro-soupape selon la revendication 2,
**caractérisée en ce que**
l'induit (18) et l'élément d'obturation de soupape (20) constituent une pièce d'actionnement mobile (3) reliée par au moins un élément de ressort (24) à la paroi (22) du boîtier (12).

6. Micro-soupape selon les revendications 1 ou 2,
**caractérisée en ce que**
l'induit (18) a un diamètre plus grand que l'élément d'obturation de soupape (20).

7. Micro-soupape selon la revendication 2,
**caractérisée en ce que**
la plaque de fond (15) du boîtier (12) comprend une plaque à orifice d'éjection (34) ayant au moins un orifice d'éjection (35).

8. Micro-soupape selon la revendication 2,
**caractérisée en ce que**
la plaque de fond (15) du boîtier (12) est un disque à orifice d'éjection (38) à plusieurs couches dont au moins un orifice d'entrée (42) est décalé radialement, c'est-à-dire de manière excentrée par rapport à au moins un orifice de sortie (44).

9. Micro-soupape selon la revendication 2,
**caractérisée en ce que**
la plaque de fond (15) du boîtier (12) comprend une buse à intervalle annulaire (48) comportant comme sortie, un intervalle annulaire ininterrompu (50).

10. Micro-soupape selon les revendications 2 ou 5,
**caractérisée en ce que**
la plaque de fond (15) est formée par une zone annulaire extérieure (54) appartenant à la partie fixe du boîtier (12), et intérieurement par une zone de buse (55) et donc reliée solidairement à la pièce d'actionnement (3) appartenant à la partie mobile de la partie inférieure de soupape (17).

11. Procédé de fabrication d'une micro-soupape composée de couches superposées, reliées au moins partiellement les unes aux autres, dont au moins une couche formée au moins partiellement en métal comporte au moins une entrée et au moins une sortie avec dans l'intervalle une surface formant siège de soupape associée à un élément d'obturation de soupape qui peut être déplacé par un moyen d'entraînement,
**caractérisé en ce que**
la micro-soupape (1) se compose de deux composants de base réalisés séparément l'un de l'autre à savoir un moyen d'entraînement électromagnétique (2) et une partie inférieure de soupape (17) à plusieurs couches, la partie inférieure de soupape (17), exclusivement métallique comprenant au moins un induit (18), l'élément d'obturation de soupape (20) et la surface formant siège de soupape (30) ainsi qu'au moins une sortie (16, 35, 44, 50) et toutes les couches de la partie inférieure (17) de la soupape sont réalisées les unes sur les autres par un dépôt galvanique de métal.

12. Procédé selon la revendication 11,
**caractérisé en ce que**
dans une première étape du procédé on applique une couche sacrifiée (61) sur une plaque de support (60) puis on applique une couche de photorésist (63) et ensuite on réalise une structure précise de la couche de photorésist (63) pour former dans la couche de photorésist (63) la structure négative de la future couche de la micro-soupape (1), puis on procède par un dépôt micro galvanique selon lequel on remplit par dépôt galvanique de métal (65) les sillons réalisés dans la structure négative de la couche de photorésist (63), puis on répète les étapes opératoires décrites ci-dessus en fonction du nombre de couches à réaliser (15, 18, 20, 22, 24, 34, 38, 41, 43, 45, 48), et enfin on sépare les micro-soupapes (1), ainsi que l'on extrait la couche de photorésist (63) des structures métalliques.

13. Procédé selon la revendication 12,
**caractérisé en ce qu'**
on applique des couches de départ galvaniques (62) entre les différentes couches à déposer par dépôt galvanique.

14. Procédé selon la revendication 12,
**caractérisé en ce qu'**
on applique la couche de photorésist (63) par laminage d'une couche de photorésist solide.

15. Procédé selon la revendication 12,
**caractérisé en ce qu'**
on applique la couche de photorésist (63) par projection ou pulvérisation d'un photorésist liquide.

16. Procédé selon la revendication 12,
**caractérisé en ce qu'**
on applique le photorésist (63) par projection ou pulvérisation d'un polyimide à l'état liquide.

17. Procédé selon la revendication 12,
**caractérisé en ce qu'**
on réalise la structure de la couche de photorésist (63) par exposition aux UV à travers un masque suivi d'un développement (photolithographie profonde UV).

18. Procédé selon la revendication 12,
**caractérisé en ce qu'**
on structure la couche de photorésist (63) par dépôt d'un oxyde ou d'un nitrure mis en structure par photolithogravure comme masque pour une opération de gravure à sec de la couche de photorésist (63).

19. Procédé selon la revendication 12,
**caractérisé en ce qu'**
on structure la couche de photorésist (63) par ablation à l'aide d'un laser.

20. Procédé selon la revendication 12,
**caractérisé en ce qu'**
on réalise par une opération de dépôt galvanique deux couches (15, 18, 20, 22, 24, 34, 38, 41, 43, 45, 48) de la micro-soupape (1), opération par laquelle on développe le métal (65) par-dessus la couche de photorésist (63) par excroissance horizontale et verticale (excroissance ou sur-croissance latérale).
